# EUROPEAN PATENT APPLICATION

(11) **EP 3 657 336 A1**
(43) Date of publication of application: **27.05.2020**
(21) Application number: 18207998.8
(22) Date of filing: 23.11.2018
(51) Int. Cl.: G06F 11/36

(54) **COVERAGE-BASED FUZZING OF INTERACTIVE APPLICATIONS**

(71) Applicant: Koninklijke Philips N.V., 5656 AG Eindhoven (NL)
(72) Inventor: Garcia-Morchon, Oscar, 5656 AE Eindhoven (NL); Pestrin, Alan, 5656 AE Eindhoven (NL); Torre Arce, Jose Luis, 5656 AE Eindhoven (NL)
(74) Representative: de Haan, Poul Erik

(57) **Abstract**

Some embodiments are directed to a fuzzing device for coverage-based fuzzing of an interactive application. The fuzzing device learns a state machine of the application and then performs fuzzing on the application by repeatedly determining a target state of the state machine and fuzzing the application from that target state. The fuzzing device executes the application while obtaining coverage information; interacts with the application to bring the application in the target state; and fuzzes the application from that state, using the coverage information to determine fuzzed inputs to provide to the application. The fuzzing device outputs an error message upon detecting an error condition in the application.

## Description

### FIELD OF THE INVENTION

The invention relates to a fuzzing device, a fuzzing method, and a computer readable storage medium.

### BACKGROUND OF THE INVENTION

Software testing is crucial for delivering working and secure software. It is commonly known that software, being written by people, contains bugs: according to a well-known estimate, across the software industry 1000 lines of delivered software code typically contain about 15-50 errors. Such errors may not only prevent the software from functioning, but also cause security problems, e.g., errors in code implementing network communication protocols such as HTTP, TLS, DNS, etcetera may be remotely exploited by attackers, for instance, to gain unauthorized access to documents and systems. An aim of software testing is to find errors in software.

One known software technique is fuzzing, also known as fuzz testing or random testing. In fuzzing, a fuzzer repeatedly generates so-called "fuzzed" inputs, e.g., invalid, expected and/or random inputs, and provided them to the application to be tested to see if they trigger an error condition such as a crash, a failed assertion, a memory leak, etc. Upon detecting such an error condition, a fuzzer may report the input leading to the error condition so that a bug in the application leading to the error condition may be further investigated and/or it can be checked whether such a bug has been fixed. Instead of or in addition to detecting error conditions, fuzzing may be used, e.g., to construct a set of test cases that achieve good coverage of the source code of the application, to detect differences between multiple applications or versions of the same application that are expected to provide the same outputs, etcetera.

A known fuzzer is "american fuzzy lop", or AFL, as described in the "Technical whitepaper for afl-fuzz" available at URL http://lcamtuf.coredump.cx/afl/technical_details.txt (incorporated herein by reference). AFL is a grey-box fuzzer, e.g., a fuzzer that instruments the application binary in order to keep track of branch coverage during execution. AFL starts with a set of inputs, and mutates them according to various fuzzing strategies, e.g., by performing bit flips and adding and subtracting integers to part of the input. When a mutated input produces an execution trace containing new coverage tuples, as measured by the instrumentation, the input is preserved for further fuzzing; inputs that do not produce new tuples are discarded.

A disadvantage of existing fuzzers is that they do not achieve sufficient coverage for interactive applications, e.g., applications that require multiple inputs and/or provide multiple outputs. For instance, in an application implementing a network communication protocol such as TLS, some code for handling a certain type of message may only be executed after several messages have already been exchanged with the application. Moreover, these messages may be dependent on each other, e.g., a session identifier or a nonce is repeated. This makes it unlikely for a fuzzer based on random mutations to perform such interactions, and hence to reach the code for handling such messages. Moreover, many different interaction patterns with the application may be possible, e.g., many different types of messages and/or orders in which they can be sent, that will usually not be systematically dealt with by approaches based on random mutations. Finally, a problem in a particular piece of code may only manifest itself if particular previous interactions have taken place, so even if mutation-based fuzzing succeeds in reaching the code through a particular interaction pattern, it may still fail to find the problem.

There is therefore a need to provide fuzzing with improved coverage, in particular for interactive applications.

### SUMMARY OF THE INVENTION

To better address one or more of the concerns discussed above, a fuzzing device for coverage-based fuzzing of an interactive application is proposed as defined in the claims.

The inventors realized that coverage of fuzzing devices may be improved by learning a state machine of the application and using that state machine to perform the fuzzing. A transition of the state machine represents an input type of an input provided to the application. Thereby, the state machine may capture interaction patterns of the application at a relatively high level. Based on the state machine, the fuzzing device performs fuzzing on the application. The fuzzing device determines a target state of the state machine for fuzzing, interacts with the application to bring it in the target state, determines a fuzzed input, and provides it to the application. The fuzzed input is determined at least in part based on coverage information obtained while executing the application, comprising information about code of the application covered during the execution. The fuzzing device outputs an error message upon detecting an error condition in the application.

By determining a target state of the learned state machine and performing coverage-based fuzzing from there, the fuzzing device can systematically divide the resources available for fuzzing between the various states, thereby improving coverage of the application code and/or ensuring that the code is executed according to the various ways in which the application may be interacted with. Moreover, this allows the fuzzing device to perform fuzzing from states that would be hard or impossible to reach, e.g., by an approach based on random permutations.

In an embodiment, the application is a communication protocol implementation. Such implementations typically have complex interaction patterns and are often ambiguously described in protocol specifications, so that different implementations may react to the same input in different ways. Hence, learning a state machine of a particular protocol implementation is particularly effective to systematically test the particular way the application implements the protocol.

In an embodiment, the fuzzing device instrument the application, allowing coverage information to be efficiently obtained from the application.

In an embodiment, learning the state machine comprises repeatedly selecting an input type from a known input type alphabet, providing an input of the input type to the application, and obtaining an output of an output type from the application. Such an interactive approach allows to effectively learn the state machine with relatively little interaction and/or without requiring availability of communication traces of earlier executions of the application.

In an embodiment, providing the input to the application comprises instantiating the input type based on previous inputs and/or outputs of the application. Thereby, complex interaction patterns, e.g., involving session identifiers and/or challenge-response-type interaction, are supported.

In an embodiment, learning the state machine further comprises instrumenting the application to provide an output indicative of a runtime state of the application. This may allow to obtain a more accurate state machine in case outputs of the application do not sufficiently reflect changes in the internal state of the application.

In an embodiment, determining the fuzzed input comprises determining an input of an input type represented by a transition from the target state, and deriving the fuzzed input therefrom. This allows more effective fuzzing by basing fuzzed inputs on normal inputs expected by the application.

In an embodiment, executing the application comprises obtaining an output of the application and adding a state to the state machine if the obtained output does not match an output type of the state machine. This allows to refine the state machine if it is found to be inaccurate, thereby allowing the newly added state to be used for fuzzing as well.

In an embodiment, determining the target state is based on the coverage information. This allows more efficient division of resources between the states of the state machine. In an embodiment, the target state is selected by exploitation-exploration balancing based on an increase in coverage from a state and a number of times a state has been selected, allowing to strike a balance between focusing on promising states and ensuring that all states are eventually selected.

In an embodiment, the fuzzing device correlates a code block of the application to a state of the state machine, improving efficiency of the fuzzing, for instance, by identifying promising target states based on identified correlations. In an embodiment, the code block is an unreached code block, and the fuzzing device outputs the state correlated to the unreached code block as a state to be refined, allowing measures to be taken to reach the unreached code block.

In an embodiment, determining the fuzzed input comprises performing a taint analysis, allowing to more effectively fuzz inputs for increasing code coverage.

In an embodiment, executing the application further comprises saving a runtime state of the application in the target state and recovering the runtime state of the application to provide a further fuzzed input to the application. This ensures that fuzzing happens from a consistent runtime state and/or improves performance by reducing the interaction needed.

In an embodiment, executing the application further comprises intercepting calls to a random-number generator to control random inputs to the application. This further ensures consistency of the fuzzing.

The fuzzing device is an electronic device. The fuzzing device may be a mobile electronic device, e.g., a mobile phone, a tablet, etc. The fuzzing device may be a computer, e.g., a set-top box, server, etc.

A further aspect of the invention is a fuzzing method. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all the steps of an embodiment of the method when the computer program is run on a computer. Preferably, the computer program is embodied on a computer readable medium.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

### BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the
Figures, elements which correspond to elements already described may have the same reference numerals. In the drawings,
Fig. 1a schematically shows an example of an embodiment of a fuzzing device,
Fig. 1b schematically shows an example of an embodiment of a fuzzing device,
Fig. 2 schematically shows an example of an embodiment of a fuzzing device,
Fig. 3 schematically shows an example of an embodiment of a fuzzing device,
Fig. 4 schematically shows an example of an embodiment of a fuzzing device,
Fig. 5 schematically shows an example of an embodiment of a fuzzing method,
Fig. 6a schematically shows a computer readable medium having a writable part comprising a computer program according to an embodiment,
Fig. 6b schematically shows a representation of a processor system according to an embodiment.

### List of Reference Numerals:

- 100: a fuzzing device
- 101: a memory
- 102: a processor
- 131: a learning unit
- 132: an instrumentation unit
- 133: an execution unit
- 134: an interaction unit
- 135: a fuzzing unit
- 136: a control unit
- 140: an application
- 141: an instrumented application
- 142: coverage information
- 143: a fuzzed input
- 144: a target state
- 145: a state machine
- 146.1, 146.2: a state
- 147: a transition
- 148: an input

- 200: a fuzzing device
- 231: a learning unit
- 233: an execution unit
- 234: an interaction unit
- 241: an output type
- 242: an output
- 243: an input type
- 244: an input

- 300: a fuzzing device
- 331: a learning unit
- 336: a control unit
- 345: a set of traces
- 400: a fuzzing device
- 437: a correlation unit
- 442: correlation information
- 443.1-443.4: a correlation
- 444.1, 441.2: a code block
- 445: a conditional jump

- 900: a fuzzing method
- 910: storing the application
- 920: learning a state machine
- 940: performing fuzzing
- 942: determining a target state
- 943: executing the application
- 944: obtaining coverage information
- 945: interacting with the application
- 946: determining a fuzzed input
- 947: providing the fuzzed input
- 948: detecting an error condition
- 949: outputting an error message

- 1000: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DETAILED DESCRIPTION OF THE EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described herein or recited in mutually different dependent claims.

Embodiments described herein are directed towards a fuzzing device that fuzzes interactive applications. Generally, in an interactive application, multiple inputs may be provided to the application, based on which the application provides at least one output. For instance, an interactive application may be a software library to which inputs can be provided in the form of function calls and from which outputs can be obtained in the form of return values. Or, an interactive application may be a network server with which a network client interacts by providing inputs in the form of sending messages and obtaining outputs in the form of receiving messages, or similarly a network client that can interact with a network server.

In an embodiment, the application is a communication protocol implementation, e.g., an implementation of TLS, DTLS, POP3, or similar. An interactive application may also comprise a user interface (UI) providing inputs to the application and/or receiving outputs of the application comprising the use of UI elements, e.g., selecting a check-box, clicking a button, displaying a pop-up alert, and the like. An interactive application may also be a command-line application to which input can be provided and from which output can be obtained using standard streams such as standard input, standard output, and/or standard error, and the like. The interactive application may run at the fuzzing device itself, but may also run at a remote device with which the fuzzing device is configured to communicate.

Various input/output patterns are possible. Typically, the application repeatedly provides an output upon being provided an input, in which executing the application may comprise repeatedly providing an input and obtaining an output in return. A typical example of such an application is a communication protocol implementation, e.g., a client or a server. A client may provide an output before obtaining the first input. A server may obtain an input before providing the first output. However, in other embodiments, not every input provided to the application necessarily results in the application providing an output. In an embodiment, executing the application may comprise providing multiple inputs to the application and obtaining an output in return, e.g., repeatedly providing one or more inputs and obtaining an output.

In an embodiment, the application is a fall detection application. For instance, the fall detection application may be for execution by a fall detection device. Such devices may be worn by elderly people and are typically designed to raise an alarm upon detecting a fall of the wearer of the device. For instance, a fall detection device may comprise multiple sensors, e.g., an accelerometer, a barometric sensor, a gyroscope, a motion detection sensor, and/or a light sensor. The fall detection device may further comprise a processor configured to obtain measurements from the multiple sensors, to execute the fall detection application to detect a fall, and/or to raise an alarm in the event of a detected fall. The fall detection application run by the fall detection device may for instance, depending on the contents of the inputs, provide an output after the first obtained measurement, after the second obtained measurement, or after any obtained measurement when it has detected a fall based on the provided inputs. Similarly, a user interface may provide an output, e.g., a pop-up message, for some types of inputs, e.g., clicking a button, and not for others, e.g., selecting a checkbox. A fuzzing device according to an embodiment may comprise a fall detection device or be arranged for digital communication with a fall detection device to perform fuzzing of a fall detection application of the device.

In various embodiments, the fuzzing device learns and/or uses a state machine of the application. A state machine of an application may provide a high-level model of interactions with the application. The inventors realized that using a state machine allows more effective coverage-based fuzzing. An interactive application typically reacts differently on an input message depending on previous inputs it has received. Effectively, these previous inputs define a state for the application that influences its next steps. Such a state may be represented in the application in many different ways, e.g., explicitly as a value of a single variable, or implicitly as a combination of values of several variables, e.g., a client_hello_received variable, a key_exchange_initiated variable, and similar. Interestingly though, a fuzzing device according to an embodiment may learn the state machine of the application from input/output behaviour of the application, independently from how a state is represented internally by the application being fuzzed.

By learning such a state machine, the fuzzing device can systematically allocate resources to perform fuzzing in the different states, and perform fuzzing in deeper states of the state machine, e.g., states reached by providing multiple possibly interrelated inputs, that cannot be easily reached with mutation-based fuzzing and similar approaches. For instance, interacting with an interactive application may involve a challenge-response type interaction, in which a deeper state of the application may be reached by providing a response to a challenge provided by the application.

Such a state machine may comprise one or more states and one or more transitions between states. Typically, the state and transitions form a directed multigraph, wherein every state can be reached from the initial state. For at least some states of the state machine, the path from the initial path may comprise multiple transitions. A transition of the state machine may represent an input type of an input provided to the application. For instance, an input type may be defined by a type of message provided to the application and/or values of one or more parameters of the message. The set of possible input types is also known as the input alphabet. For instance, the application may implement a network communication protocol, e.g., TLS, in which case various message types maybe defined by the protocol, e.g., ClientHello, ClientKeyExchange, ChangeCipherSpec, etc. The input type of a message according to such a network communication protocol may correspond to one or more such message types, but an input type of a message may also depend on a parameter of such a message, e.g., the input type of a ClientHello message for TLS 1.2 may differ from the input type of a ClientHello message for TLS 1.0. Typically, the fuzzing device is configured with an input type function for mapping inputs to input types: the input type function may be predetermined, or the fuzzing device may obtain a set of input messages and learn the input type function therefrom.

Analogously, in many cases the fuzzing device is also configured with an output type function for mapping outputs to output types. Like input types, output types may, e.g., be defined by a type of message and/or values of one or more parameters of the messages, e.g., an output type may be ServerHello or ServerHello for TLS version 1.2. Like the input type function, this function may be predetermined or learned from a set of observed output messages. The set of possible output types is also known as the output alphabet. In many cases, providing an input to the application leads to the application providing an output. As discussed above, however, an input provided to the application may not always lead to the application providing an output. For the purposes of the state machine, if the application does not provide an output, this may be regarded as an empty-type output. Similarly, the application may provide an exceptional output, e.g., the application may crash, emit a signal, return an empty or malformed message, close a network connection, etcetera. The output function may assign such outputs to be error-type outputs. Output types are typically used for an output function of the state machine, as described below.

A state of the state machine may be considered as an abstraction of a runtime state, or internal state, of the application during execution. The state machine typically comprises a unique initial state, known as start state. A transition from a first state, e.g., the initial state, to a second state labelled with an input type may represent that the application reaches a runtime state represented by the second state after an input of the input type is provided to the application if it is in a runtime state represented by the first state, e.g., the initial state. At an abstract level, a state of the state machine represents a represent runtime state of the application, e.g., a particular combination of values of variables of the application. For instance, a state of a network server may represent that the network server has processed a message of type ClientHello and is now waiting for a message of type ClientKeyExchange. However, at a concrete level, the fuzzing device typically does not learn the state machine by inspecting runtime states of the application. Instead, the fuzzing device typically learns the state machine from input/output-behaviour of the application, e.g., inputs provided to and outputs obtained from the application. In an embodiment, learning the state machine is not based on coverage information. Basing the state machine on input and output types without regarding runtime states may allow a state machine to be obtained at the appropriate level of abstraction to make it feasible to learn yet expressible enough to perform effective fuzzing. Moreover, this may allow learning the state machine similarly for different implementations of a same protocol.

Various particular types of state machine are known and can readily be applied in fuzzing devices described herein. For instance, in some embodiments, the state machine is a Mealy machine. In such a case, the state machine may further comprise an output function mapping a state and an input type to an output type. For example, a trace of the application, e.g., a sequence of inputs provided to the application and outputs obtained from the application, may be accurately modelled by such a Mealy machine if, starting from the initial state and following transitions labelled with input types of respective inputs, the output function for each transition gives an output type of an output following the input corresponding to the transition. In other embodiments, the state machine is a Moore machine, in which case the state machine may comprise an output function mapping a state to an output type. A trace may be accurately modelled by such a Moore machine if, starting from the initial state and following transitions labelled with input types of respective inputs, the output function for each state reached by a transition gives an output type of an output following the input corresponding to the transition. Various other types of state machines and variants of the types presented above are known and may be similarly applied.

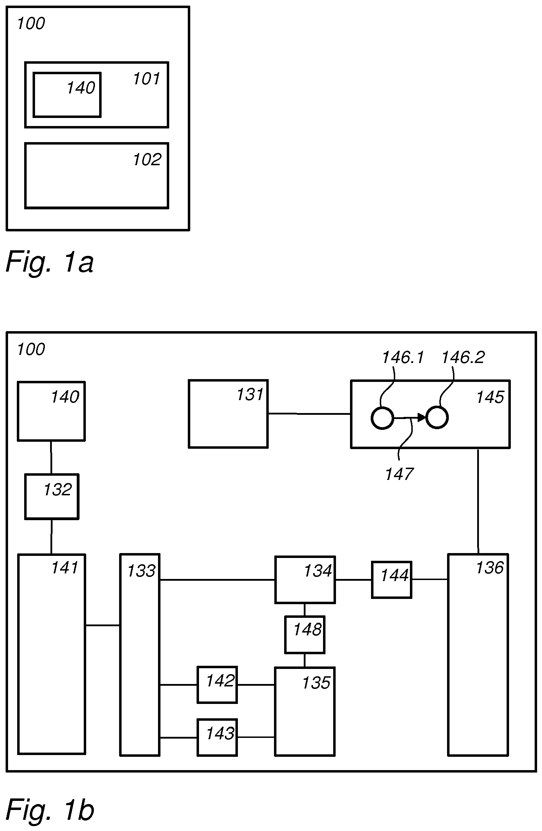

Fig. 1a schematically shows an example of an embodiment of a fuzzing device 100 for instrumented fuzzing of an application 140, e.g., an interactive application. Fuzzing device 100 comprises a memory 101 and a processor 102. Memory 101 may be used for data and/or instruction storage. For example, memory 101 may comprise software and/or data on which processor 102 is configured to act. Memory 101 may also store application 140. Processor 102 may be implemented as one or more processor circuits, e.g. microprocessors, ASICs, FPGA and the like. Memory 101 may comprise computer program instructions which are executable by processor 102. Processor 102, possibly together with memory 101, is configured according to an embodiment of a fuzzing device.

Fig. 1b schematically shows an example of an embodiment of a fuzzing device 100 for instrumented fuzzing of an application 140. Fig. 1b schematically shows functional units that may be functional units of processor 102. For example, Fig. 1b may be used as a blueprint of a possible functional organization of processor 102. For example, the functional units shown in Fig. 1b, e.g., the learning unit 131, may be wholly or partially be implemented in computer instructions that are stored at device 100, e.g., in an electronic memory of device 100, and are executable by a microprocessor of device 100. In hybrid embodiments, functional units are implemented partially in hardware, e.g., as coprocessors, and partially in software stored and executed on device 100.

Fuzzing device 100 may comprise a learning unit 131 configured to learn a state machine 145 of application 140. Shown in the figure is a state machine 145 with two states: state 146.1 and state 146.2, and one transition: transition 147 from state 146.1 to state 146.2. As discussed above, a transition of state machine 145, e.g., transition 147, may represent an input type of an input provided to application 140. Learning unit 131 may learn state machine 145 in various ways, several examples of which are elaborated upon in figures below. Typically, learning unit 131 is configured to learn state machine 145 in a learning phase prior to a fuzzing stage in which fuzzing of application 140 is performed.

Fuzzing device 100 may comprise various additional units that cooperate to perform fuzzing on application 140, e.g., an execution unit 133, an interaction unit 134, a fuzzing unit 135, and/or a control unit 136. Broadly speaking, performing fuzzing on application 140 may comprise repeatedly determining a target state 144 of the state machine and then executing application 140 to perform fuzzing from target state 144.

For example, control unit 136 may be configured to determine target state 144 of state machine 145 for fuzzing. Various methods to determine target state 144 are possible. For example, in an embodiment, target state 144 may be chosen from states of state machine 145 in a round-robin fashion, e.g., control unit 136 may be configured to perform a graph traversal of state machine 145 and to select subsequent target states 144 as the current state of the graph traversal. Various types of graph traversal, e.g., depth-first or breadth-first, may be beneficial. In other embodiments, control unit 136 may select target state 144 randomly, etcetera. Control unit 136 may also be configured to stop the fuzzing, e.g., when an error condition in application 140 has been detected, after a fixed number of target states have been fuzzed, after each state has been selected a fixed number of times, if all states have been fuzzed without covering new code, etcetera. In preferred embodiments, determining target state 144 is based on coverage information obtained during an execution of application 140, as discussed in more detail below.

Fuzzing device 100 may further comprise an execution unit 133 configured to execute application 140. Executing the application may be performed in any way appropriate for the type of application. For instance, application 140 may be an application native to fuzzing device 100 and/or an operating system running at fuzzing device 100, in which executing the application may simply comprise instructing the operating system to run the application. Application 140 may comprise source code, e.g. a script, and/or bytecode, execution unit 133 comprising a compiler and/or an interpreter to run the source code and/or bytecode. Execution unit 133 may also execute application 140 by emulation and/or binary translation, e.g., to enable fuzzing of non-native applications. Application 140 need not be executed at fuzzing device 100 itself, e.g., execution unit 133 may be configured to instruct a separate execution device to execute application 140, e.g., the execution device may be a mobile phone, a smartcard, or even another type of appliance such as a copying machine, a printer, etcetera. Generally, execution unit 133 may instruct the execution device to execute the application and may interact with the application and/or obtain coverage information as discussed below. Any suitable communication means can be used for this, e.g., a network connection, e.g., using SSH, or a cabled connection, e.g., using USB, RS-232, etcetera.

Executing application 140 typically involves interacting with the application to provide inputs to the application and/or obtain outputs from the application. For instance, such interactions may take place while learning the state machine, while bringing the application in a particular state, and/or while providing a fuzzed input to the application. These interactions may take place in any way appropriate for the application at hand. For instance, providing an input to application 140 may comprise sending the input via a communication channel, e.g., a shared memory, a file, a socket, an inter-process communication mechanism, etcetera, or even a network or cabled connection, e.g., if the application is executed at a separate execution device. Similarly, obtaining an input from application 140 may comprise obtaining it via a similar communication channel.

Advantageously, executing application 140 may comprise obtaining coverage information 142. Coverage information 142 may comprise information about code of the application covered during the execution. For instance, coverage information 142 may comprise a hit count, e.g., a value indicative of how many times a particular code block was executed. As an example, the hit count may indicate how many times a particular code block was reached from a particular other code block, e.g., in order to capture program flow of instrumented application 141. For instance, a hit count may be a bit, indicating whether or not the code block was executed, a byte, e.g., providing a count between 0 and 255, a word, etcetera. A code block may, for instance, comprise an instruction or a set of instructions, e.g., a set of subsequent instructions between two branch points of the application. For instance, instrumentation unit 132 may insert code coverage code for updating a hit count of each code block of application 140. Code coverage information 142 may be used advantageously to more effectively guide fuzzing, e.g., to select target states and/or to determined fuzzed inputs.

In some embodiments, instrumentation is used to obtain the coverage information 142. In such embodiments, fuzzing device 100 may comprise an instrumentation unit 132 configured to instrument application 140 in order to provide coverage information 142 over a communication channel. In such cases, instrumentation may result in an instrumented application 141, that may be used in place of application 140 by device 100, e.g., executing application 140 may comprise executing instrumented application 141, interacting with application 140 may comprise interacting with instrumented application 141, providing an input to application 140 may comprise providing the input to instrumented application 141, etcetera.

Instrumentation unit 132 may perform source instrumentation, e.g., instrumenting application 140 may comprise obtaining source code of application 140 and modifying the source code to include instrumentation source code. Instrumentation unit 132 may then compile the modified source code to obtain instrumented application 141, but this is not necessary, e.g., execution unit 133 may comprise an interpreter and/or runtime for executing the application in source code form. Instrumentation may also comprise binary instrumentation, e.g., instrumentation unit 132 may comprise obtaining a binary, e.g., compiled, application 140 and modifying the compiled application 140 to include instrumentation binary code, thus obtaining instrumented application 141. Instrumentation unit 132 may be configured to perform the instrumentation before and/or after the compiled application has been loaded into memory for execution, the latter sometimes also being referred to as dynamic binary instrumentation. Various alternatives, e.g., instrumenting intermediate code such as bytecode or assembly code, may be used.

In any case, instrumented application 141 provides coverage information 142 over a communication channel to which execution unit 133 has access, which can be any suitable communication channel, e.g., as above the communication channel may comprise one or more of a shared memory, a file, a socket, an inter-process communication mechanism, a network or cabled connection. Execution unit 133 may obtain the coverage information 132 during an execution by obtaining the coverage information over the communication channel.

Coverage instrumentation may also be combined with various other kinds of instrumentation. For instance, exception handling instrumentation may be used, e.g., when an error condition is raised in the form of an exception using the fuzzing techniques described herein, control may be given to a user to investigate the exception further. As another example, performance counting instrumentation may be used to measure various performance characteristics and/or logging instrumentation may be used to provide status information about the application, and the like.

Obtaining coverage information 142 need not rely solely on instrumentation or even rely on instrumentation at all. For instance, in some embodiments, execution unit 132 obtains coverage information 142 by arranging an execution environment of the application to intercept function calls, messages, and/or events of the application, e.g., using hooking. In some embodiments, execution unit 132 obtains coverage information 142 by monitoring an interpreted or emulated execution of the application.

Fuzzing device may further comprise an interaction unit 134 configured to interact with the application to bring the application in target state 144. For instance, interaction 134 may identify a path from a source node of state machine 145 to target state 144, e.g., using Dijkstra's shortest path algorithm, and provide inputs to the application corresponding to input types represented by respective transitions of the path. The path may comprise multiple transitions. Interaction unit 134 may choose an input corresponding to an input type in various ways, e.g., randomly, by choosing a predetermined input of the input type, by re-using a previously observed input of the input type, etcetera.

Advantageously, however, the interaction unit 134 may choose the input, e.g., instantiate the input type, based on previous inputs provided to the application and/or outputs obtained from the application, which may allow fuzzing based on more complex interaction patterns. For example, such previous inputs may comprise a random nonce to be included in the input, a cryptographic key to be used for encryption, decryption, signing, signature verification, etcetera, a challenge to provide a response to, and so on. For example, the interaction with application 140 may comprise a challenge-response type interaction, e.g., in which the application provides a challenge that it expects to be used, e.g., echoed, in a response. In this case, the input type of the input provided to the application may indicate that it is a response to an earlier challenge, and interaction unit 134 may instantiate this input type by echoing the earlier challenge in the input. As another example, if application 140 implements the TLS protocol, then interaction unit 134 may use earlier information about supported cipher-suites and/or earlier key material to construct an appropriate input to provide to application 140. More generally, interaction unit 134 may comprise a test harness that effectively provides a stateless implementation of a communication protocol for interacting with application 140 based on previous inputs and/or outputs, e.g., the test harness may implement the next-message function of a cryptographic protocol.

Fuzzing device 100 may also comprise a fuzzing unit 135 configured to determine a fuzzed input 143 to be provided to application 140. Fuzzed input 143 is determined based at least in part on collected coverage information 142. This allows fuzzing to be performed more effectively, e.g., since collected coverage information 142 may indicate which previous strategies for determining fuzzed input 143 were successful and may hence be repeated. Various ways of using collected coverage information 142 are discussed in more detail below.

In an embodiment, determining fuzzed input 143 may comprise determining an input 148, e.g., a regular input, and deriving fuzzed input 143 therefrom. For example, input 148 may be a normal, valid, and/or expected input of application 140. Deriving fuzzed input 143 from input 148 may result in effective fuzzing. For instance, providing a completely random input to application 140 may result in the application discarding this input quickly, such that code after such input checking may not be reached. On the other hand, if fuzzed input 143 is derived from a determined input 148, application 140 may process fuzzed input 143 similarly to input 148, allowing some or all input checks to be passed and code after such checks to be reached. Various ways of determining input 148 are possible, e.g., input 148 may be an input previously used for fuzzing, an input from an obtained trace of the application, a random valid input, a hardcoded input, or the like. Fuzzed input 143 may be based on multiple such determined inputs, e.g., if multiple inputs need to be provided to application 140 before it provides an output, fuzzing may be performed by deriving fuzzed input 143 from a combination, e.g., a concatenation, of multiple determined inputs.

Determining input 148 may comprise selecting an input type and determining an input of the selected input type. For instance, input 148 may be determined from the input type by interaction unit 134 as described before, e.g., based on previous inputs provided to the application and/or outputs obtained from the application, e.g., while bringing the application in target state 144. For example, the selected input type may be an input type represented by a transition from target state 144 in state machine 145, for example, by a transition from target state 144 and/or to a resulting state that does not correspond to an error-type output, as described above. As a consequence, fuzzed input 143 may be promising to increase code coverage, for example, because it is similar to a determined input that causes non-trivial processing by the application. Moreover, selecting input types based on transitions from the target state may allow to systematically explore the various different ways of processing input that application 140 performs from the target state, improving code coverage.

In various embodiments, fuzzing unit 135 determines input 148 at least in part based on collected coverage information. For instance, fuzzing unit 135 may keep track of which inputs 148 lead to improved code coverage, and use this to guide the fuzzing. For instance, after a number of fuzzed inputs 143 derived from input 148 have been provided to the application, fuzzing unit 135 may determine whether these fuzzed inputs have led to an increase in code coverage. If the increase in code coverage is sufficient, e.g., a new code block was reached, a conditional jump was performed for the first time, etcetera, fuzzing unit 135 may store and/or prioritize input 148 to derive future fuzzed inputs from; otherwise, fuzzing unit 135 may discard and/or de-prioritize input 148. As another example, fuzzing unit 135 may use coverage information 142 in order to determine whether an input 148 causes particular code, e.g., a particular code block or set of code blocks, to be reached, for instance in order to guide fuzzing to particular target code.

Having determined input 148, fuzzing unit 135 may generate a fuzzed input 143 from this input. Generating the fuzzed input 143 may comprise a random mutation of the determined input, e.g., fuzzing unit 135 may perform one or more of a bit flip operation and an arithmetic operation, e.g., an addition or subtraction of a fixed integer. Various such random mutation techniques are known and may be applied, e.g., consecutively, on a single input 148.

In an embodiment, determining fuzzed input 143 comprises performing a taint analysis. For instance, the taint analysis may indicate a change in coverage information 143 as a consequence of a particular choice of a fuzzed input 143. For instance, coverage information 143 may be used to detect how changes to particular bits or bytes of the input affect control flow of application 140. Fuzzing unit 135 may for instance determine that performing fuzzing on a particular part of input 148 leads to a substantially different control flow and then perform more mutations on this particular part. As another example, fuzzing unit 135 may detect that a change to a particular part of the input leads to a change in a value used in a conditional jump of application 140, for example, a conditional jump to a so far unreached code block. Upon detecting such a change, fuzzing unit 135 may decide to perform further mutations to this particular part. Hence, taint analysis may identify input mutations promising to improve code coverage.

Interestingly, when generating fuzzed input 143 based on the input 148, fuzzing unit 135 may consider the input type of input 148 according to state machine 145, e.g., the input type of the determined input may indicate that a particular part of the determined input is promising for fuzzing, e.g., it is a header field of an implemented protocol, it is a checksum, or the like. Hence, knowledge of state machine 145 may reduce the need to apply random mutations by providing guidance on how to generate the fuzzed input.

Typically, multiple fuzzed inputs are provided to the application from the same target state 144. For example, fuzzing unit 135 may generate multiple fuzzed inputs 143 from the same input 148, e.g., bit flips of subsequent bits in the same input 148. Moreover, from the same target sate 144, multiple inputs 148 may be used to generate fuzzed inputs from, e.g., multiple inputs corresponding to multiple inputs types corresponding to transitions from the target state. In such cases, it may be beneficial to ensure consistency of the application between multiple times a fuzzed input is provided to the application in the same target state, for example, to be able to measure effectiveness of a fuzzing strategy without randomness effects.

In an embodiment, ensuring consistency is achieved by controlling random inputs to the application. For instance, if interaction unit 134 interacts multiple times with the application to bring the application in the same target state 144, random inputs may be controlled such that the application obtains the same random inputs multiple times, increasing the consistency of performing fuzzing from the target state. In an embodiment, fuzzing device 100 controls random inputs to application 140 by intercepting calls to a random-number generator, e.g., a random-number generator called by the application. For instance, instrumentation unit 140 may instrument application 140 to replace calls to the random-number generator by instrumented calls, or calls to the random-number generator may be otherwise intercepted, e.g., by means of hooks, by controlling access to randomness file such as /dev/random or /dev/urandom, and the like. For instance, random numbers may be replaced by pseudo-random numbers generated by a fixed-seed pseudo-random number generator in order to provide random inputs to the application that are sufficiently close to real random numbers yet the same across executions. However, for more thorough fuzzing the randomness should not always be the same, e.g., in an embodiment, fuzzing device 100 repeatedly brings application 140 in target state 144 with different randomness in order to improve code coverage. Randomness provided to the application may be chosen randomly or pseudo-randomly, or a fuzzing strategy may be applied to the random inputs similar to fuzzed input 143, e.g., using bitflips, arithmetic operations, and the like.

In an embodiment, e.g., in order to improve consistency while fuzzing, interaction unit 133 saves a runtime state of the application 140 in target state 144, and recovers this runtime state to provide a further fuzzed input to the application. For example, interaction unit 133 saves the runtime state after the application is brought in target state 144; and fuzzing unit 135 determines multiple fuzzed inputs to be provided to the application, the runtime state being recovered before each further fuzzed input is provided to the application. Saving and recovering the runtime state may be performed in various way depending on the type of application 140, e.g., by making a copy of the address space of the application, e.g., using copy-on-read and/or copy-on-write strategies to limit costs, and/or by keeping track of which variables are changed after providing the fuzzed input to the application and restoring these values to their originals. Using runtime states may not only improve consistency when fuzzing multiple times from the same state, but, in some cases, it may also improve performance, for instance because it allows to avoid repeating relatively complex interaction patterns needed to bring the application in the target state.

Returning to execution unit 133. Execution unit 133 may provide fuzzed input 143 to application 140. Typically, execution unit 143 provides fuzzed input 143 while the application is in target state 144, e.g., after the application is brought in target state 144. As discussed above, providing fuzzed input 143 to the application may comprise, e.g., providing the input via a stream of the application, e.g., a standard input stream; via a socket, e.g., a network socket; via a user interface, etcetera.

Providing fuzzed input 143 or interacting with the application to bring it in target state 144 may trigger an error condition in the application. Execution unit 133 may be configured to output an error message upon detecting such an error condition, for instance, the error condition may indicate a bug in application 140 that may be reported, fixed, hot-patched, and the like. For instance, execution unit 133 may run one or more of an address sanitizer, a data flow sanitizer, a thread sanitizer, and a leak sanitizer to detect the error condition. For example, instrumentation unit 132 include such a sanitizer in instrumented application 141. Execution unit 133 may also obtain an error signal from the operating system and/or the interpreter, for instance, indicating that the application has crashed, has raised an exception, and the like. In an embodiment, the error message comprises the target state and the fuzzed input, thus providing feedback on what triggered the error. The error message may also comprise, e.g., a stack trace, an exception type or description, a memory dump, or any other useful information about the error condition or its causes. Instead of or in addition to outputting the error message, execution unit 133 may also provide control of application 140 to a debugging environment such as gdb or an interactive Python prompt to let a user further investigate the error.

While executing application 140, fuzzing device 100 may obtain an output that does not match an output type of state machine 145. For example, interaction unit 134 may obtain such an unexpected output while interacting to bring the application in target state 144. Or, fuzzing unit 135 may obtain such an unexpected output when providing fuzzed input 143 to the application. For instance, fuzzed input 143 may be a valid input for application 140 from target state 144, but application 140 does not provide an output of the type predicted by state machine 145, e.g., by its output function. Or, fuzzed input 143 may be not be a valid input, e.g., a malformed input, but application 140 does not provide an error-type output or an output. Interestingly, in such cases, learning unit 131 may add a state to the state machine, e.g., a new state with a transition matching the input type of the provided input or an error-type input. Learning unit 131 may simply add the state to the state machine, but learning unit 131 may also, e.g., provide the input and the unexpected output to a state machine learning algorithm used to learn state machine 145. In an embodiment, learning unit 131 is configured iteratively to learn state machine 145 as outputs of the state machine are obtained during fuzzing that do not match an output type already included in state machine 145. As a consequence of adding states to the machine 145 while executing the application, these states may be later selected by control unit 136 for fuzzing, allowing to achieve better coverage by fuzzing from the added state.

As mentioned before, the coverage information 142 obtained by execution unit 133 may in various embodiments be used by control unit 136 to determine the next target state 144. Using coverage information 142 allows control unit 136 to make more effective choices in what target state to perform fuzzing from, and/or how many times to bring the application in the target state, and/or how many times to provide a fuzzed input to the application brought in the target state. For instance, control unit 136 may prioritize states that lead to an increase in code coverage, for example, control unit 136 may determine next target state 144 by weighted random sampling of a state of the state machine, a weight of a state of the state machine being based at least in part on a measured increase in code coverage in previous attempts to fuzz from that state. For instance, the increase in code coverage may be counted as a number of basic blocks, a number of lines or code, and/or or a number of instructions reached for the first time. Using coverage information may increase effectiveness of fuzzing by allowing to focus on promising states to perform fuzzing from.

In an embodiment, control unit 136 may determine target state 144 by selecting target state 144 by exploitation-exploration balancing, for instance, based on an increase in coverage from a state and a number of times a state has been selected. Exploitation-exploration balancing may allow to ensure that promising states for fuzzing are selected relatively often, while making sure that also less-promising states have some chance of being selected. For instance, exploration-exploitation balancing may comprise selecting each state in state machine 145 with a probability according to an exploitation-exploration trade-off. For example, with a fixed exploitation probability a promising state may be selected, and otherwise a less explored state may be selected, e.g., as indicated by a low number of times the state has been selected. The exploitation probability may be configured to increase in time. This may be an effective way of making sure sufficient exploration of new states takes place while also ensuring that promising states are fuzzed from in sufficient detail. Similarly, a probability of a state may be computed using an upper-confidence bound strategy in which a state with a higher possible increase in code coverage is selected, e.g., computed from an expected increase in code coverage and a variance in this increase, e.g., based on previously measured coverage information 142. Monte Carlo tree search-type strategies with exploitation-exploration balancing may also be used. The exploration-exploitation strategy used by control unit 136 may consider the cost of switching to another state, e.g., by assigning a higher weight to the previous target state 144, e.g., to more optimally allocate resources in in embodiments where further fuzzing from the target state costs less resources than selecting a new target state and fuzzing from there.

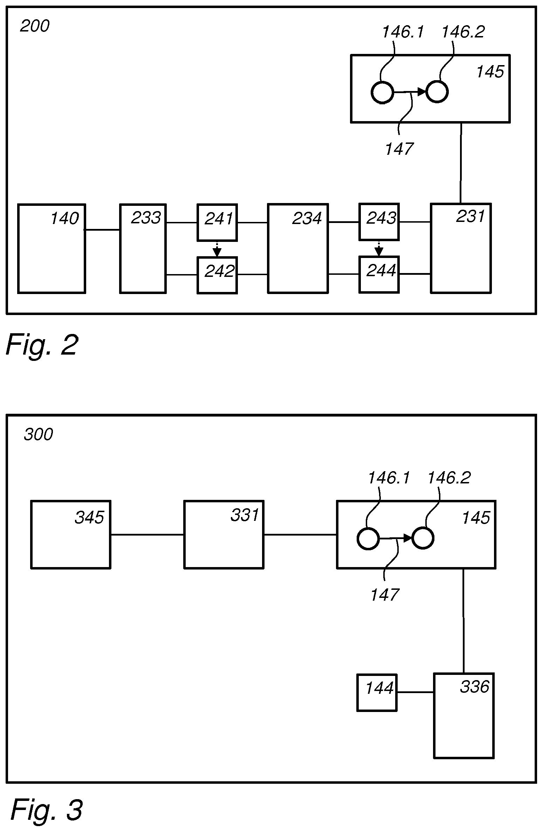

Fig. 2 schematically shows an example of an embodiment of a fuzzing device 200. Fuzzing device is a fuzzing device for coverage-based fuzzing of an application 140. Fuzzing device 200 may be based on fuzzing device 100 described above, e.g., fuzzing device may comprise instrumentation unit 132, fuzzing unit 135, and/or control unit 136 of fuzzing device 100. Fuzzing device 200 also may comprise a learning unit 231, e.g., based on learning unit 131 of fuzzing device 100. Fuzzing device 200 may further comprise an execution unit 233, e.g., based on execution unit 133 of fuzzing device 100. Moreover, fuzzing device 200 may comprise an interaction unit 234, e.g., based on interaction unit 134 of fuzzing device 100. As above, Fig. 2 schematically shows functional units that may be functional units of processor.

Learning unit 231 of fuzzing device 200 may be configured to learn a state machine. Shown in the figure is state machine 145 comprising states 146.1 and 146.2 and transition 147 from state 146.1 to state 146.2. For example, transition 147 may represent an input type of an input provided to application 140. Various examples of state machines are described throughout.

To learn state machine 145, learning unit 231 may repeatedly select an input type 243 from a known input type alphabet, provide an input 244 of input type 243 to application 140, and obtain an output 242 of an output type 241 from application 140. For example, interaction unit 234 may determine input 244 from input type 243 and/or determine output type 241 from output 242. In an embodiment, interaction unit 234 instantiates input type 243 by input 244 based on previous inputs and/or outputs, e.g., output 242, of the application, as discussed with respect to interaction unit 134 above. Similarly, execution unit 233 may provide input 244 to application 140 and/or obtain output 242 from application 140, e.g., as discussed with respect to execution unit 133 above. In particular, execution unit 233 may execute application 140 or instrumented application 141 of Fig. 1 if instrumentation is applied. Learning state machine 231 may comprise constructing a state machine consistent with output types 241 of outputs 242 obtained from the application, and/or selecting an input type 243 based on current state machine 145 in order to learn more information about its structure. In one embodiment, learning unit 231 generates multiple possible sequences of input types, e.g., all possible sequences up to a certain length, and interacts with application 140 according to each generated sequence. This may be an effective way to learn state machine 145 if it is relatively small.

Preferably, however, learning unit 231 employs an active state machine learning algorithm to learn state machine 145, also known as an active automata learning algorithm. In an embodiment, the L* algorithm is used, e.g., in combination with Chow's W-method for approximate equivalence testing. Implementations of these algorithm are readily available, e.g., as discussed in "LearnLib: a framework for extrapolating behavioral models", Harald Raffelt et al., Int J Softw Tools Technol Transfer, 11:393-407, 2009 (incorporated herein by reference). Learning unit 231 may employ such an implementation by using the learning algorithm to determine an input type 243 and/or a sequence of input types to provide to application 140. Interaction unit 234 may translate input type 243 or the sequence of input types to respective inputs 244 to be provided to the application, e.g., based on inputs previously provided to the application and/or obtained from the application. Execution unit 234 may then interact with application 140 to provide the determined input or inputs, e.g., input 244, to the application, and/or obtain outputs, e.g., output 242, from the application. Interaction unit 234 may translate such outputs to output types, e.g., output type 241, that may then be provided again to the learning algorithm to update the state machine and/or determine more inputs 244 to be provided to the application for further refinement of state machine 145.

In some embodiments, learning unit 231 is configured to learn state machine 145 in a learning phase before a fuzzing phase in which the fuzzing of application 140 takes place. In such cases, learning unit 231, e.g., using a state machine learning algorithm such as L*, may set a fixed upper bound on state machine 145 to be learned, wherein the state machine learning algorithm guarantees to correctly model the state machine of application 140 if the model has size at most the fixed upper bound. Fixing the state machine before fuzzing may help to optimally allocate resources. However, this is not necessary. In other embodiments, learning the state machine may be interleaved with fuzzing the application, e.g., learning unit 231 may learn state machine 145 and, as it learns a new state, instructs a control unit of fuzzing device 200 to perform fuzzing in the newly learned state. Such interleaved state machine learning and fuzzing may be beneficial to balance time spent on state machine learning and fuzzing, and/or to bring forward the moment in time at which fuzzing device 200 may start detecting error conditions.

In some embodiments, application 140 is instrumented to provide an output, e.g., output 242, indicative of a runtime state, e.g., an internal state, of the application. This may allow to learn a more accurate state machine model of application 140 if runtime state changes of the application are not sufficiently reflected in outputs of application 140, e.g., if outputs do not reflect the runtime state transition sufficiently directly or sufficiently accurately. For instance, application 140 may be a monitoring application configured to detect an alarm condition based on multiple inputs. Such an alarm condition may comprise several checks that may be passed or not, resulting in a change in runtime state of the application. However, such an application may only provide a single type of output, e.g., an alarm-type output, if the alarm condition is satisfied, without providing intermediate feedback on which of the several checks have passed. In other words, this change in runtime state is not directly reflected in an output of the application. In this example, the application may be instrumented to provide an output indicating that a particular check has passed, or indicating which checks have passed so far. More generally, an instrumentation unit of fuzzing device 200, e.g., based on instrumentation unit 132 of fuzzing device 100, may obtain an identifier of a variable of application 140 to be monitored, and instrument application 140 to output a value of the variable upon modification. Or, the instrumentation unit may identify, e.g., based on symbolic analysis, a variable of application 140 used in a branch condition based on which a large amount of code may be reached, and instrument application 140 to output whether the branch condition is met. Instrumentation may also be performed by a user, e.g., based on suggested instrumentations of instrumentation unit 132.

Fig. 3 schematically shows an example of an embodiment of a fuzzing device 300. Fuzzing device 300 is for coverage-based fuzzing of an application. Fuzzing device 300 may be based on fuzzing device 100 and/or 200 described above, e.g., fuzzing device 300 may comprise instrumentation unit 132 and/or execution unit 133 and/or interaction unit 134 and/or fuzzing unit 135 of fuzzing device 100. Fuzzing device 300 may further comprise learning unit 331, e.g., based on learning unit 131 of fuzzing device 100, configured to learn state machine 145 of the application. A transition of state machine 145, e.g., transition 147 from state 146.1 to state 146.2 shown in the figure, may represent an input type of an input provided to the application. Fuzzing device 300 may also comprise a control unit 336, e.g., based on control unit 136 of fuzzing device 100. Similarly to above, Fig. 3 schematically shows functional units that may be functional units of a processor.

Learning unit 331 of fuzzing device 300 may be configured to learn state machine 145 by obtaining a set of traces 345 and deriving state machine 145 therefrom. A trace may comprise a sequence of inputs provided to the application and outputs received from the application. For example, learning unit 331 may obtain set of traces 345 as an input by the user, or by employing a sniffer, etcetera. In order to derive state machine 145, learning unit 331 may translate a trace of set of traces 345 to a sequence of input types and/or output types, e.g., by applying a preconfigured input and/or output functions, as described above. Learning unit 331 may then process the translated sequences of input types and/or output types using a state machine learning algorithm, e.g., a passive state machine learning algorithm such as the RPNI algorithm as is readily available in LearnLib, or similar. In an embodiment, learning unit 331 is further configured to obtain a set of possible input types, e.g., an input alphabet, from set of traces 345. For example, learning unit 331 may apply unsupervised learning to assign input types to inputs and/or output types to outputs. In an embodiment, learning unit 331 trains an auto-encoder neural network on inputs and determines an input type of an input based on an encoding of the input determined by the auto-encoder neural network, and/or similarly for outputs. This allows for highly automated state machine-based fuzzing.

Control unit 336 of fuzzing device 300 may be configured to determine target state 144 of state machine 145 for fuzzing based at least in part on set of traces 145. For example, control unit 336 may determine that a particular state is reached in relatively few traces of set of traces 145, and prioritize and/or select that particular state as target state 144. States that occur in few traces may correspond to less-used and/or less-tested parts of the application 140, and hence be a particularly effective choice to perform fuzzing from.

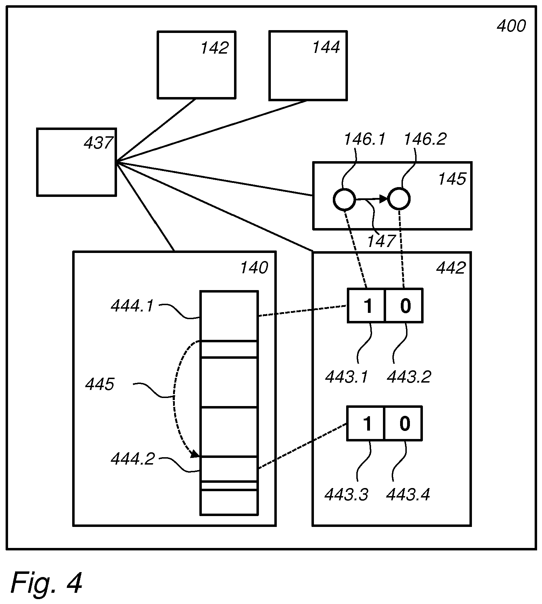

Fig. 4 schematically shows an example of an embodiment of a fuzzing device 400. Fuzzing device 400 is for coverage-based fuzzing of an application 140. Fuzzing device 400 may be based on fuzzing device 100, 200, and/or 300 described above, e.g., fuzzing device may comprise one or more of a learning unit, e.g., learning unit 131, 231 or 331, an instrumentation unit, e.g., instrumentation unit 132, an execution unit, e.g., execution unit 133 or 233, an interaction unit, e.g., interaction unit 134 or 234, a fuzzing unit, e.g., fuzzing unit 135, and a control unit, e.g., control unit 136. Similarly to above, Fig. 4 schematically shows functional units that may be functional units of a processor. Fuzzing device 400 may be configured to learn a state machine 145 of application 140, e.g., by means of a learning unit. A transition of state machine 145, e.g., transition 147 from state 146.1 to state 146.2, may represent an input type of an input provided to application 140. Fuzzing device 400 may be further configured to determine a target state 144 for fuzzing, e.g. by means of a control unit; and execute application 140. Executing application 140 may comprise obtaining coverage information 142 comprising information about code of application 140 covered during the execution.

The inventors realized that by correlating code blocks of the application to states of the state machine, e.g., based on coverage information 142, valuable information may be obtained, e.g., for directing future fuzzing. In an embodiment, correlations are based on coverage information 142 obtained from interacting with the application while learning state machine 145 and/or while interacting with application 140 to bring it in target state 144. Such interactions may correspond to normal, e.g., non-fuzzed, interactions with the application and hence may allow to gain insight into code usually covered by the application while in a particular state. In an embodiment, instead or in addition, coverage information 142 as a result of providing a fuzzed input to application is used.

Fuzzing device 400 may comprise a correlation unit 437 configured to correlate a code block of application 140 to a state of the state machine 145. For example, a code block may comprise an instruction or a set of instructions, e.g., a set of subsequent instructions between two branch points of the application. Shown in the figure by way of example are multiple code blocks of application 140, e.g., code blocks 444.1 and 444.2, and a conditional jump 445, in this case, jumping from the end of code block 441.1 to the start of code block 444.2. For example, conditional jump 445 may be a JNZ processor instruction of a binary application 140, an IFNE bytecode instruction of a Java application 140, an if-statement of an interpreted application 140, etcetera. For example, correlation unit 437 may determine a correlation, e.g., correlation 443.1, between a code block, e.g., code block 444.1, and a state, e.g., state 146.1, if coverage information 142 indicates that the code block is executed when providing an input to the application from that state. For instance, coverage information 142 may indicate that the code block was executed at least a particular number of times, e.g., at least once, at least 10 times or at least 50 times, when providing an input from that state; or the code block was executed at least a particular percentage of times when providing an input from that state, e.g., at least 10%, at least 50%, or at least 90%; that at least a particular percentage of executions of the code block were from that state, e.g., at least 10% of executions, at least 50%, or at least 90%; and the like. Although the correlations are shown in the figures as being 0 or 1, in practice, correlation unit 437 may use a more detailed correlation measure, e.g., one of the percentages or counts described above.

Correlations, e.g., correlations 443.1-443.4, may be advantageously used by various components of fuzzing device 400. In particular, in an embodiment, a control unit of fuzzing device 400 determines target state 144 for fuzzing based at least in part on a correlation determined by correlation unit 437. For example, the control unit may determine target state 144 by establishing that this state correlates with one or more code blocks of application with low code coverage and/or one or more code blocks for which error conditions have been detected in the past, e.g., to direct future fuzzing towards such promising code blocks.

However, it is not necessary that correlation unit 437 correlates a code block to a state of the state machine based on observing that the code block is reached from that state. In an embodiment, the correlated code block is an unreached code block, e.g., coverage information 142 indicates that the code block has not been executed in an earlier execution by fuzzing device 400. For example, correlation unit 437 may correlate, e.g., through correlation 443.3, the unreached code block, e.g., code block 444.2, to the state, e.g., state 146.1, by determining that a correlated code block, e.g., code block 444.1, is correlated, e.g., through correlation 443.1, to the state 146.1, and that the correlated code block 444.1 comprises a conditional jump, e.g., conditional jump 445, to the unreached code block 444.2. Or, correlation unit 437 may correlate the unreached code block to a particular state due to its proximity in memory to other code blocks correlated to that state. Upon determining such a correlation, correlation unit 437 may output the state as a state to be refined. For instance, a control unit of fuzzing device 400 may prioritize this state for future fuzzing, or the state may be output to the user, e.g., for refining the state machine. This may help to ensure that the unreached code block will be reached by the fuzzing.

Various embodiments of fuzzing devices may comprise a communication interface that may be selected from various alternatives. For example, the interface may be a network interface to a local or wide area network, e.g., the Internet, a storage interface to an internal or external data storage, a keyboard, an application interface (API), etc.

The fuzzing device may have a user interface, which may include well-known elements such as one or more buttons, a keyboard, display, touch screen, etc. The user interface may be arranged for accommodating user interaction for performing fuzzing, providing a set of traces, obtaining the error message, etc. Memory 101 may be implemented as an electronic memory, say a flash memory, or magnetic memory, say hard disk or the like. Memory 101 may comprise multiple discrete memories together making up memory 101. Memory 101 may also be a temporary memory, say a RAM. Part or all of the memory may be an electronic memory, magnetic memory, etc. For example, the memory may have volatile and a non-volatile part. Part of the storage may be read-only.

Typically, fuzzing devices, e.g. fuzzing device 100, 200, 300 and/or 400, each comprise a microprocessor which executes appropriate software stored at the fuzzing device; for example, that software may have been downloaded and/or stored in a corresponding memory, e.g., a volatile memory such as RAM or a non-volatile memory such as Flash. The fuzzing devices may also be equipped with microprocessors and memories. Alternatively, the fuzzing devices may, in whole or in part, be implemented in programmable logic, e.g., as field-programmable gate array (FPGA). The fuzzing devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL etc.

In an embodiment, the fuzzing device comprises a learning circuit, an instrumentation circuit, an execution circuit, an interaction circuit, a fuzzing circuit, and a control circuit. The fuzzing device may comprise additional circuits, e.g., a correlation unit. The circuits implement the corresponding units described herein. The circuits may be a processor circuit and storage circuit, the processor circuit executing instructions represented electronically in the storage circuits. A processor, e.g., a processor circuit, may be implemented in a distributed fashion, e.g., as multiple sub-processors. The circuits may also be FPGA, ASIC or the like.

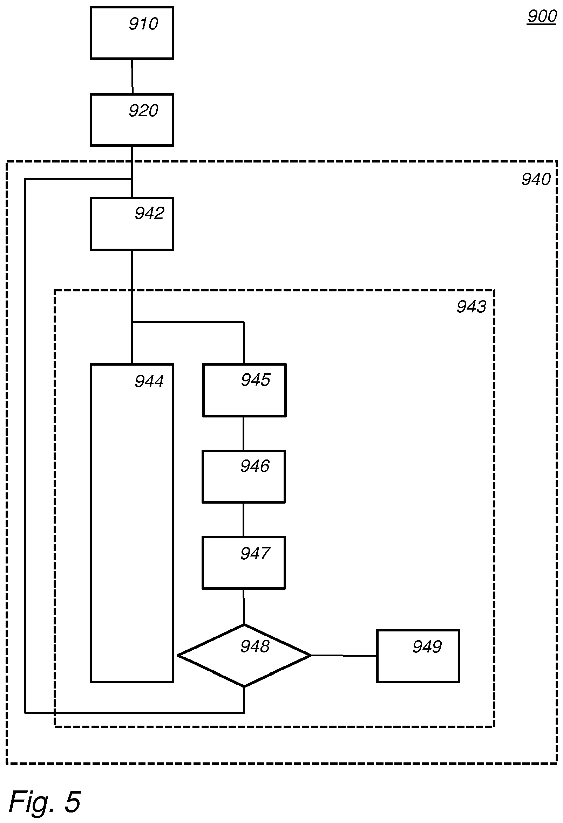

Fig. 5 schematically shows an example of an embodiment of a fuzzing method 900 for coverage-based fuzzing of an application. The application may be an interactive application. Fuzzing method 900 may comprise storing 910 the application in a memory. Fuzzing method 900 may further comprise learning 920 a state machine of the application. A transition of the state machine may represent an input type of an input provided to the application.

Fuzzing method 900 may further comprise performing 940 fuzzing on the instrumented application. Performing 940 the fuzzing may comprise repeatedly determining 942 a target state of the state machine for instrumented fuzzing and/or executing 943 the application. Executing 944 the application may comprise obtaining 944 coverage information, the coverage information comprising information about code of the application covered during said execution. Executing 944 the application may further comprise interacting 945 with the instrumented application to bring the application in the target state. Executing 944 the application may also comprise determining 946 a fuzzed input based on collected coverage information. Executing 944 the application may further comprise providing 947 the fuzzed input to the application. Executing 944 the application may also comprise detecting 948 an error condition and, upon the detecting, outputting 949 an error message.

Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, steps 945 and 946 may be executed, at least partially, in parallel. Moreover, a given step may not have finished completely before a next step is started.

Embodiments of the method may be executed using software, which comprises instructions for causing a processor system to perform method 900. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source, and object code such as partially compiled form, or in any other form suitable for use in the implementation of an embodiments of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

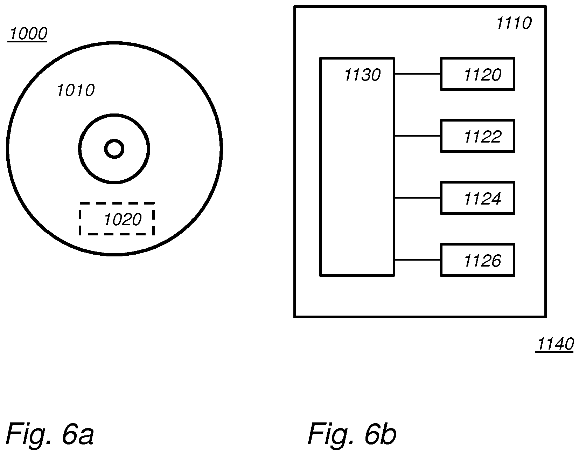

Fig. 6a shows a computer readable medium 1000 having a writable part 1010 comprising a computer program 1020, the computer program 1020 comprising instructions for causing a processor system to perform a fuzzing method according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said fuzzing method.

Fig. 6b shows in a schematic representation of a processor system 1140 according to an embodiment. The processor system comprises one or more integrated circuits 1110. The architecture of the one or more integrated circuits 1110 is schematically shown in Figure 6b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the fuzzing device, may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A fuzzing device for coverage-based fuzzing of an application, the application being an interactive application, the fuzzing device comprising:
- a memory configured to store the application;
- a processor configured to:
- learn a state machine of the application, a transition of the state machine representing an input type of an input provided to the application;
- perform fuzzing on the application, performing the fuzzing comprising repeatedly:
- determining a target state of the state machine for fuzzing;
- executing the application, comprising:
- obtaining coverage information, the coverage information comprising information about code of the application covered during said execution;
- interacting with the application to bring the application in the target state;
- determining a fuzzed input based at least in part on collected coverage information;
- providing the fuzzed input to the application;
- outputting an error message upon detecting an error condition in the application.

2. A fuzzing device as in Claim 1, wherein the application is a communication protocol implementation.

3. A fuzzing device as in any of the preceding claims, wherein the processor is further configured to instrument the application to provide coverage information over a communication channel, obtaining the coverage information during said execution comprising obtaining the coverage information over the communication channel.

4. A fuzzing device as in any of the preceding claims, wherein learning the state machine comprises repeatedly selecting an input type from a known input type alphabet, providing an input of the input type to the application, and obtaining an output of an output type from the application.

5. A fuzzing device as in Claim 4, wherein providing the input to the application comprises instantiating the input type based on previous inputs and/or outputs of the application.

6. A fuzzing device as in any one of Claims 4-5, wherein learning the state machine further comprises instrumenting the application to provide an output indicative of a runtime state of the application.

7. A fuzzing device as in any of the preceding claims, wherein determining the fuzzed input comprises determining an input of an input type represented by a transition from the target state, and deriving the fuzzed input therefrom.

8. A fuzzing device as in any of the preceding claims, wherein executing the application comprises obtaining an output of the application and adding a state to the state machine if the obtained output does not match an output type of the state machine.

9. A fuzzing device as in any of the preceding claims, wherein determining the target state is based on the coverage information.

10. A fuzzing device as in Claim 9, wherein determining the target state comprises selecting the target state by exploitation-exploration balancing based on an increase in coverage from a state and a number of times a state has been selected.

11. A fuzzing device as in any of the preceding claims, wherein the processor is further configured to correlate a code block of the application to a state of the state machine.

12. A fuzzing device as in Claim 11, wherein the code block is an unreached code block, the fuzzing device outputting the state correlated to the unreached code block as a state to be refined.

13. A fuzzing device as in any of the preceding claims, wherein determining the fuzzed input comprises performing a taint analysis.

14. A fuzzing device as in any of the preceding claims, wherein executing the application further comprises saving a runtime state of the application in the target state and recovering the runtime state of the application to provide a further fuzzed input to the application.

15. A fuzzing device as in any one of Claims 3-14, wherein executing the application further comprises intercepting calls to a random-number generator to control random inputs to the application.

16. A fuzzing method for coverage-based fuzzing of an application, the application being an interactive application, the fuzzing method comprising:
- storing the application in a memory;
- learning a state machine of the application, a transition of the state machine representing an input type of an input provided to the application;
- performing fuzzing on the instrumented application, performing the fuzzing comprising repeatedly:
- determining a target state of the state machine for instrumented fuzzing;
- executing the application, executing the application comprising:
- obtaining coverage information, the coverage information comprising information about code of the application covered during said execution;
- interacting with the instrumented application to bring the application in the target state;
- determining a fuzzed input based on collected coverage information;
- providing the fuzzed input to the application;
- output an error message upon detecting an error condition in the instrumented application.

17. A computer readable storage medium (2000) comprising transitory or non-transitory data (2020) representing instructions to cause a processor system to perform the method according to Claim 16.
